## Europäisches Patentamt
## European Patent Office
## Office européen des brevets

(11) Publication number: **0 315 313 B1**

(12)
# EUROPEAN PATENT SPECIFICATION

(45) Date of publication of the patent specification: 05.09.90

(51) Int. Cl.⁵: **F16D 65/22,** F16D 51/20

(21) Application number: **88308936.9**

(22) Date of filing: **27.09.88**

(54) Drum brake assembly.

(30) Priority: **04.11.87 US 117120**

(43) Date of publication of application:
**10.05.89 Bulletin 89/19**

(45) Publication of the grant of the patent:
**05.09.90 Bulletin 90/36**

(84) Designated Contracting States:
**DE FR GB**

(56) References cited:
**EP-A- 0 142 421**
**GB-A- 1 485 241**
**US-A- 3 064 767**
**US-A- 3 661 233**

(73) Proprietor: **GENERAL MOTORS CORPORATION,
General Motors Building 3044 West Grand Boulevard,
Detroit Michigan 48202(US)**

(72) Inventor: **Shellhause, Ronald L., 519 Bennert Drive,
Vandalia Ohio 45377(US)**

(74) Representative: **Denton, Michael John et al, Patent
Section Vauxhall Motors Limited 1st Floor Gideon
House 26 Chapel Street, Luton Bedfordshire
LU1 2SE(GB)**

ACTORUM AG

## Description

This invention relates to a drum brake assembly having a parking brake mechanism including a parking brake actuating lever connected to a parking brake cable so that when the cable is tensioned the drum brake is mechanically applied for parking brake purposes. It more particularly relates to such a drum brake assembly in which the connection of the cable to the parking brake actuating lever within the drum brake assembly is made in a blind manner, that is with the person assembling the cable to the lever being able to do so with the drum brake assembly completely assembled on the vehicle.

Typical drum brake parking brake actuating mechanisms have required that the cable be inserted through the backing plate opening and positioned in approximate relation to the connection point with the parking brake actuating lever which is pivotally mounted on one of the brake shoe assemblies. The operator then has to manoeuvre the end of the cable and/or the parking brake actuating lever to make the connection. This therefore requires that the assembly is done with the drum brake being off of the remainder of the drum brake assembly so that visual and manipulative capabilities are present to complete the assembly. A typical example of such a connection requiring this type of assembly is disclosed in US Patent No. 3,064,767 forming the precharacterising part of Claim 1.

The object of the present invention is to provide a drum brake assembly which is easier to assemble.

To this end, a drum brake assembly in accordance with the present invention is characterised by the features specified in the characterising portion of Claim 1.

The arrangement embodying the invention particularly permits the parking brake cable assembly to be inserted through the appropriate opening in the backing plate and to be guided and connected to an end of the parking brake actuating lever, which is pivotally mounted on one of the brake shoe assemblies, without the operator having to see the parts as they are approached and having to manipulate the parts so as to make the connection. In this arrangement the parking brake cable assembly is inserted through an apertured boss in the backing plate and pushed axially inward into the drum brake assembly. Since the drum is already in position as a part of the drum brake assembly, and therefore covers the brake shoes and closely approaches the backing plate and shield, the assembly operation is what is known as a blind assembly because the operator cannot see or manipulate each of the components being attached together within the drum brake assembly.

The arrangement is such that once the mechanism is installed and in position the operator may pull outwardly on the cable and check that the cable is properly engaged with the end of the parking brake actuating lever. Once such engagement is confirmed, the assembly is completed by inserting a cable conduit assembly into snap-in engagement with a tube guide mounted in the backing plate opening, completing the cable assembly into the brake.

It is a feature of the invention herein disclosed and claimed to provide a mechanism which will permit a blind assembly of the cable end to the end of the parking brake actuating lever. More specifically, an arrangement is provided on the end of the parking brake actuating lever to receive the button end of the cable itself and cammingly guide the button end and the immediate portion of the cable through a slot and then permit the (enlarged) button end to move into its final engaged position, with the cable section extending through a guide and retention member on the end of the actuating lever.

In order to accomplish this, the cable must be capable of being aimed or prepositioned so that it is able, upon axial assembling movement thereof, to engage the end of the parking brake actuator and then to accomplish the connection. This may be done by providing a tube guide mounted in an opening in the backing plate which extends from a laterally offset position at the backing plate to a laterally aligned position in spaced relation to the guide and retention member of the parking brake actuating lever so that when the cable is inserted and moved axially, the enlarged cable end or button will be guided and connected as above noted. A parking brake actuating lever return spring is provided about the cable and will also act as a guide for the cable and its button end, particularly throughout the space between the end of the tube guide and the point at which the enlarged end is received by the guide and retention member. In one arrangement, the tube guide extends through much of the distance between the opening in the backing plate in which it is mounted and the guide and retention member. In this instance it is advantageous to so curve the tube guide as to position it so as to aim the cable end properly for blind assembly, as above noted.

In another embodiment, the tube guide is a relatively short tube guide, terminating just inside the backing plate. With this arrangement it is preferred that a spring guide is also provided, the spring guide being secured to the backing plate and having an open passageway therethrough which may receive, both the spring and the cable, including its enlarged end, therethrough. The spring guide is so positioned that one end is in alignment with the terminus of the short tube guide near the backing plate, and the other end is positioned to direct the spring and the cable, including its enlarged end to the guide and retention member of the actuating lever.

In either arrangement, it is preferred that the spring has one end thereof secured in the cable conduit assembly provided on the end of the cable assembly in the area where it may be located within and connected to the tube guide mounted through the backing plate opening. Thus the parking brake cable assembly includes the cable conduit assembly, the cable itself, the return spring and the cable enlarged end.

The operator will insert the parking brake cable assembly through the tube guide and move the cable and its enlarged end axially until the blind connection is completed. The operator may then pull back on the parking brake cable assembly to check that the connection is actually completed, feeling an appropriate resistance to such movement. The cable conduit assembly may then be snapped in position in the tube guide. In a preferred embodiment, the retention arrangement is also provided as a sealing arrangement which will prevent dirt, dust, water, etc. from entering the interior of the drum brake assembly through the backing plate opening provided for the parking brake cable assembly.

The present invention will now be described, by way of example, with reference to the accompanying drawings, in which:--

Figure 1 is an elevation view of a drum brake assembly embodying the invention, with parts in section;

Figure 2 is a view taken in the direction of arrows 2-2 of Figure 1 showing one embodiment of the invention in cross-section with portions thereof in elevation;

Figure 3 is fragmentary view similar to that of Figure 1 illustrating a modification of the invention;

Figure 4 is a fragmentary elevation view with parts broken away and in section, taken in the direction of arrows 4-4 of Figure 3 and illustrating a portion of the blind assembly connection;

Figure 5 is a view similar to Figure 2, taken in the direction of arrows 5-5 of Figure 3, and further illustrating the embodiment of the invention shown in that Figure; and

Figure 6 is a fragmentary cross-section view of a portion of the parking brake cable assembly of Figure 5, with parts broken away, taken in the direction of arrows 6-6 of Figure 5.

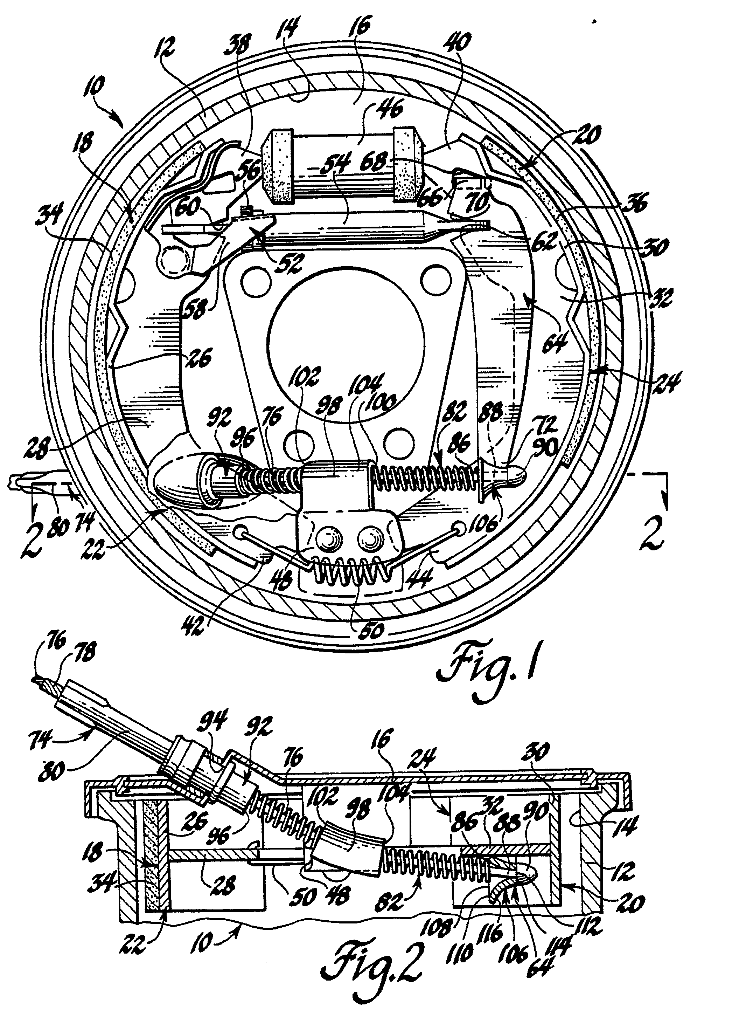

The drum brake assembly 10 of Figure 1 includes a rotatable drum 12 having an internal drum friction surface 14. The drum brake assembly 10 has a backing plate 16 on which is mounted a first brake shoe assembly 18 and a second brake shoe assembly 20 for movement into and out of engagement with the internal drum friction surface 14 for brake actuation and release, as is well known in the art. Brake shoe assemblies 18 and 20 respectively include shoes 22 and 24 respectively composed of a rim 26 and a web 28, and a rim 30 and a web 32. First brake shoe assembly 18 has a brake lining 34 secured to the rim 26, and second brake shoe assembly 20 has a brake lining 36 secured to rim 30. The outer surface of the brake linings 34 and 36 provide lining friction surfaces which mate with the internal drum friction surface 14 during brake actuation. The brake shoe assemblies 18 and 20 respectively have upper shoe ends 38 and 40 and lower shoe ends 42 and 44. The upper shoe ends 38,40 are arranged to be operatively engaged by pistons (not shown) in a wheel cylinder 46 so that the drum brake assembly 10 may be hydraulically actuated for service brake operation. As is well known in the art, a suitable service brake operator such as a master cylinder provides hydraulic brake fluid under pressure to the wheel cylinder 46 to expand the pistons therein and move the upper shoe ends 38 and 40 apart so that the brake linings 34 and 36 are moved into braking engagement with the internal drum friction surface 14. In the particular drum brake assembly 10 illustrated, the brake shoe assemblies 18,20 are arranged in a leading-trailing manner. Therefore the lower shoe ends 42 and 44 are positioned to engage a fixed anchor at the bottom of the assembly and axially opposite the wheel cylinder 46. The lower shoe ends 42,44 are guided in position relative to the backing plate 16 by a shoe retainer 48, and are continuously urged toward the anchor positioned between the shoe retainer and the backing plate 16 by a spring 50, as is well known in the art. It is to be understood that the drum brake assembly 10 may be also of other well known types such as the duo servo type. Although not shown, it is to be understood that a suitable brake shoe return spring is connected to the rims 26 and 30 in the general area of the wheel cylinder 46 so as to continually urge the upper shoe ends 38 and 40 toward the retracted position. This arrangement is also well known in the art.

The drum brake assembly 10 is illustrated as having a brake adjuster mechanism 52, which includes a spreader bar or strut 54, an adjuster wheel 56 and an adjuster lever 58, as is well known in the art. The spreader bar or strut 54 is typically provided in two pieces threadedly joined for adjusting purposes, also well known in the art. The strut 54 extends into recesses 60 and 62 respectively formed in webs 28 and 32 near upper shoe ends 38 and 40 so as to be retained in proper position relative to the shoes 22,24. Since this particular drum brake assembly 10 is one which also provides for mechanical parking brake actuation, the strut 54 acts as a mechanical spreader bar as is well known in the art.

The parking brake assembly, in addition to the use of strut 54 as a spreader bar, has a parking brake actuating lever 64 which has one end 66 pivotally mounted on the web 32 in a manner well known in the art. In this example, the web 32 is provided with an aperture 68 through which the lever end 66, bent so as to extend through the aperture 68, extends to provide a pivoting attachment. Parking brake actuating lever 64 is also provided with a recess 70 which also receives one end of the spreader bar 54. Parking brake actuating lever 64 extends downwardly immediately adjacent one side of web 32 on the side thereof opposite the backing plate 16, terminating in a lever lower end 72. As is well known in the art, when parking brake actuating lever 64 is pivoted clockwise as seen in Figure 1, it will act to move the spreader bar 54 against the first brake shoe assembly 18, moving that assembly outwardly to engage the internal drum friction surface 14, with the lever reaction exerted through the lever end 66 and rim 30 at aperture 68 moving the second brake shoe assembly 20 so that its lining also engages the internal drum friction surface 14. Thus the drum brake assembly 10 is mechanically actuated for parking brake purposes, as is well known in the art.

The drum brake assembly 10 is provided with a parking brake cable assembly 74. Parking brake cable assembly 74 is illustrated as including a cable 76 mounted for axial movement in a cable sheath 78. As is better illustrated in Figure 6, the cable sheath 78 terminates in a cable conduit assembly 80, while the cable 76 extends therebeyond inside the drum brake assembly 10 as will be further described. As is well known in the art, the other end of cable 76 and cable sheath 78 are connected to a parking brake actuating mechanism such as a pedal assembly provided for ease of operation by the vehicle operator so that the cable 76 is tensioned when the pedal is actuated to actuate the parking brake mechanism. The parking brake cable assembly 74 also includes a spring 82 which is connected to the cable conduit assembly 80 at one end 84 about the portion of cable 76 which extends further into the drum brake assembly 10 beyond the cable conduit assembly 80. As can be seen in the drawings, and as is well known in the art, the spring other end 86 is positioned for engagement with a portion of the lever lower end 72 of parking brake actuating lever 64. The end 88 of cable 76 is provided with an enlarged section or other element 90, commonly referred to as a button. Button 90 may be of the type illustrated in the above noted US patent No. 3,064 787, or of any other suitable configuration. In the particular invention herein disclosed and claimed however, it is shaped in what may be characterized as a bullet-nosed configuration for better camming movement to be described.

A suitable tube guide 92 is secured in an opening 94 formed in the backing plate 16 through which the parking brake assembly is assembled. In the embodiment shown in Figures 1 and 2, the tube guide 92 terminates shortly after it passes through the opening 94 so that its terminus 96 is positioned in a laterally spaced relation to the parking brake actuating lever 64. When a short tube guide 92 is used, it is desirable to also provide a spring guide 98. Spring guide 98 is illustrated as being formed as a part of the shoe retainer 48, the spring guide portion extending upwardly from the point at which the shoe retainer is mounted to the backing plate. The spring guide 98 may be substantially J-shaped in cross section, this configuration being evident in the perspective view thereof in Figure 1. Thus the spring guide 98 has an open passageway 100 extending therethrough. Open passageway 100 is preferably slightly larger than the outer diameter of the spring 82 with one passageway end 102 being positioned in alignment with the terminus 96 of the tube guide 92. The open passageway 100 is preferably slightly curved, as can be determined from the view in Figure 2 of the spring guide 98, so that the other passageway end 104 is aligned with the lever lower end 72 of the parking brake actuating lever 64, and more particularly with a guide and retention member 106 formed thereon to be further described.

Guide and retention member 106 is preferably of a generally funnel shape with a large opening 108 at one funnel end 110 and a smaller opening 112 at the other funnel end 114. The large opening 108 faces generally toward the backing plate boss containing the opening 94 and the smaller opening 112 faces in the opposite direction. The guide and retention member 106 has an inner surface 116 which acts as a camming guide surface for the button 90 as will be described. Inner surface 116 extends from the one funnel end 110 to the other funnel end 114. A slot 118, better seen in Figure 4, is formed through a side of the guide and retention member 106 so that it joins the funnel ends 110 and 114. The slot 118 opens upwardly substantially toward the lever pivoted end 66. As is better seen in Figure 4, the slot 118 sides are also tapered due to the funnel or bell-like arrangement of the guide and retention member 106 so that the width of the slot near the one funnel end 110 is greater than the width or diameter of the button 90 as well as the diameter of the cable 76. As is also best seen in Figure 4, the large opening 108 is substantially larger in diameter than the diameter of the button 90, while the smaller opening 112 is smaller than the width or diameter of the button 90 and is only slightly larger than the diameter of the cable 76.

When the parking brake cable assembly 74, and particularly the parking brake cable section surrounded by spring 82 and having the button 90 formed thereon, is inserted through the backing plate 16 opening 94 and tube guide 92 by substantially axial movement of the parking brake cable assembly, the spring 82 and the button 90 enter the one passageway end 102 of the spring guide 98 and are slightly deflected in their path by the curvature of the open passageway 100 so that after they pass through that passageway and exit through the other passageway end 104, they are aimed substantially at the guide and retention member 106. Therefore, as they are axially moved further into the drum brake assembly, the button 90 passes into the large opening 108 and engages the camming guide surface formed by the inner surface 116 thereof. At this time further axial movement of the cable 76 and its button 90 will result in a camming action between inner surface 116 and the outer surface of the button 90 so that the cable end is moved upwardly and passes through the slot 118 and therebeyond. Thus, shortly before the button 90 of the cable 76 passes beyond the other funnel end 114 of the guide and retention member 106, the button 90 is positioned beyond the slot 118 while the portion of cable 76 immediately adjacent thereto extends through the slot.

Slight additional axial movement of the cable 76 and its button 90 will position the large end of the cable immediately beyond the other funnel end 114 of the guide and retention member 106. Because of the cantilever-like biasing action of spring 82 tending to keep the spring in axial alignment between the spring guide 98 and the guide and retention member 106, the cable and its enlarged end having been moved laterally upward by this camming action, the button 90 will move downwardly as the cable portion immediately adjacent thereto drops back through the slot 118 so that the cable extends through the smaller opening 112, as is seen in Figure 4, with the button 90 in axial alignment and engagement with the other funnel end 114 as is shown in Figure 2 as well as Figures 1, 3, 4 and 5. This completes the blind attachment of the cable 76 to the parking brake actuating lever 64, the cable being in position so that when a tension force is applied thereto the force is transmitted to the parking brake actuating lever and will pivot that lever clockwise, as seen in Figure 1, to mechanically apply the drum brake assembly 10. It will be noted that the other end 86 of spring 82 will engage the guide and retention member 106 so as to continually urge the parking brake actuating lever 64 and cable 76 to the release position shown in Figure 1.

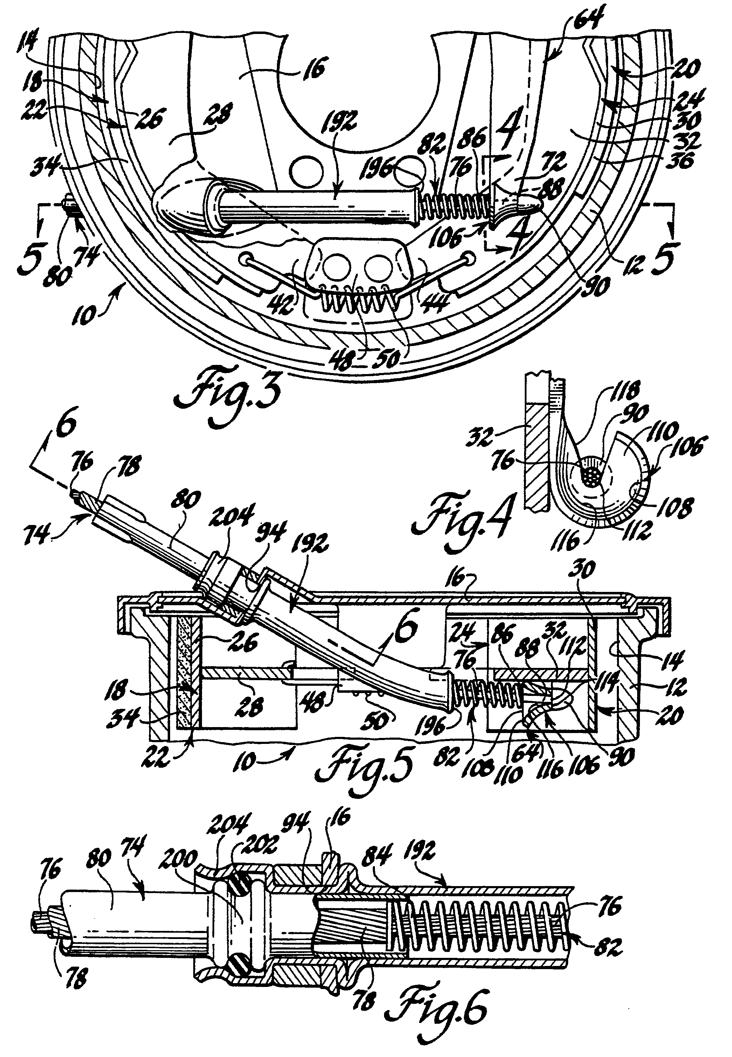

When the assembler-operator has made the blind assembly to the extent above described, he may exert a tension force on the cable 76 by pulling on the cable conduit assembly 80 in the direction away from away from the backing plate 16 and feeling the resistance to movement of the cable because of the connection to the parking brake actuating lever 64. Having satisfied himself that the connection has been made, he may then insert the cable conduit assembly 80 through the tube guide 92 so that the cable conduit assembly will be retained in the tube guide and sealed therein as shown in Figure 6. This is described in detail below in relation to the elongated and curved tube guide which is illustrated in Figures 3, 5 and 6.

The modification of the invention illustrated in Figures 3-6 involves the tube guide and arrangements for guiding spring 82. The modified tube guide 192 is secured in the backing plate 16 opening 94 in the same manner as tube guide 92 of Figures 1 and 2. However, instead of terminating near the boss through which opening 94 is formed, the tube guide 192 extends in a curved manner from the laterally displaced position as it passes through the boss so that its end 196 is so aligned with the guide and retention member 106 that the spring 82, the cable 76, and the cable section enlarged end or button 90 are guided by the elongated and curved tube guide rather than requiring a separate spring guide as illustrated at 98 in Figures 1 and 2. Otherwise, the arrangement operates in the same manner as that described above.

Figure 6 shows the manner of securing the cable conduit assembly 80 in to the tube guide 192 and also sealing the tube guide. This is accomplished by providing flanged groove 200 on the exterior of the cable conduit assembly 80 at the proper axial position and placing an O-ring 202 therein. The outer end of the tube guide 192 (or tube guide 92 in Figures 1 and 2) is provided with an inwardly extending flange 204 which will let the O-ring 202 snap thereunder into position so that the O-ring cooperates with its groove 200 side walls and the inner side wall of the inwardly extending flange 204 to retain the cable conduit assembly 80 in position, therefore also retaining the cable sheath 78 in the same axial position. Furthermore, O-ring 202 will seal against the tube guide inner surface as well as against the cable conduit assembly 80 so that water, dirt, dust, etc. cannot pass through the opening 94 in the backing plate 16.

The inwardly extending flange 204 has a lead-in ramp angle which displaces the rubber of the O-ring 202 during installation, and a more sharply angled retaining side wall on the inner side thereof which holds the O-ring in place once the cable conduit assembly 80 is pushed fully into position. If desired, the internal retaining angle of inwardly extending flange 204 may be made as a vertical wall which will cause the O-ring 202 to shear before allowing the cable conduit assembly 80 to be removed.

When used in drum brakes with parking brake capability, both modifications support what would otherwise be somewhat laterally unstable cable return springs 82, preventing those springs from tending to buckle as the parking brake mechanism is actuated, giving an additional benefit of more direct spring forces being exerted for the return of the cable 76 and the parking brake actuating lever 74 to the released position illustrated in Figures 1 and 3.

## Claims

1. A drum brake assembly (10) having a backing plate (16), a rotatable drum (12) to be braked, first and second brake shoe assemblies (18,20) mounted on the backing plate and movable into and out of braking engagement with the rotatable drum, service brake actuating means (46) and parking brake actuating mechanism (64,74) for so moving the brake shoe assemblies, the parking brake actuating mechanism including a parking brake actuating lever (64) having one end (66) pivotally mounted on one of the brake shoe assemblies, the parking brake actuating lever operatively acting on the other of the brake shoe assemblies when pivotally moved in one direction to move the brake shoe assemblies into braking engagement with the rotatable drum, a parking brake cable assembly (74) having a cable (76) with one end (88) attached to an other end (72) of the parking brake actuating lever (64) and when tensioned so moving the parking brake actuating lever in said one direction, the cable extending through an opening (94) in the backing plate (16) and adapted to be connected with a parking brake actuating lever; the one end (88) of the cable (76) having a first diameter with a button (90) on the end thereof, the button having a second diameter substantially greater than the first diameter of the one end of the cable; characterised by a guide and retention member (106) formed on the other end (72) of the parking brake actuating lever (64) and having a large opening (108) in one end (110) sufficiently large to receive the button therein, a smaller opening (112) in an other end (114) axially spaced from the large opening and connected therewith by an internal guide surface (116), the smaller opening (112) having a larger diameter than the first diameter of the one end (88) of the cable (76) but smaller than the second diameter of the button (90), and a slot (118) formed through the internal guide surface (116) and connecting the one end (110) and the other end (114) of the guide and retention member (106), the guide and retention member receiving the button (90) in camming relation with axial movement of the cable (76) and the button and directing the button through the slot (118) with the one end (88) of the cable in the slot, the button upon being moved beyond the other end (114) of the guide and retention member moving into tension force transmittable engagement therewith with the one end (88) of the cable moving out of the slot (118) and extending axially through the one and the other end of the guide and retention member so that the button latches the one end (88) of the cable (76) to the other end (72) of the parking brake actuating lever (64) for parking brake actuation; thereby allowing blind assembly of the cable (76) to the parking brake actuating lever.

2. A drum brake assembly according to claim 1, in which the guide and retention member (106) is substantially funnel shaped with the one end (108) being the larger end and the other end (112) being the smaller end.

3. A drum brake assembly according to claim 1 or claim 2, in which the parking brake cable assembly (74) includes a cable conduit assembly (80) through which the cable (76) extends, a spring (82) received about the one end (88) of the cable and having one end (84) secured to the cable conduit assembly, the spring acting as a guide means for the one end (88) of the cable during axial movement of the cable for blind assembly connection to the parking brake actuating lever (64), the other end (86) of the spring engaging the guide and retention member (106) after the blind assembly connection is completed.

4. A drum brake assembly according to claim 3, in which a tube guide (92) is mounted in the backing plate (16) opening (94) and receives the cable conduit assembly (880), the one end (88) of the cable (76), and the spring (82) axially therethrough, the tube guide being positioned relative to the guide and retention member (106) of the parking brake actuating lever (64) so as to aim the spring and the one end (88) of the cable including the button (90) toward engagement with the guide and retention member.

5. A drum brake assembly according to claim 4, in which the tube guide (192) is curved from a laterally displaced position as it extends through the backing plate (16) opening (94) to a laterally aligned position with the guide and retention member (106).

6. A drum brake assembly according to claim 4, in which the tube guide (92) terminates adjacent the backing plate (16) opening (94), and further including a spring guide (98) secured to the backing plate having an open passageway (100) with one end (102) in alignment with the terminus (96) of the tube guide and the other end (104) in alignment with the guide and retention member (106), the spring guide acting with axial movement of the parking brake cable assembly (74) during blind assembly to receive the spring (82) therethrough and direct the spring and therefore the one end (88) of the cable (76) including the button (90) to the guide and retention member (106).

7. A drum brake assembly according to any one of claims 3 to 6, in which the tube guide (92,192) and the cable conduit assembly (80) have means (200-204) cooperating upon the cable conduit assembly (80) reaching the final assembled position to latch the cable conduit assembly to the tube guide against axial movements, the cable (76) being axially movable therein during parking brake actuation and release to move the parking brake actuating lever (64) for parking brake actuation and to be moved by the spring (82) to a parking brake release position for parking brake release.

8. A drum brake assembly according to any one of claims 1 to 7, in which the parking brake actuating mechanism including a spreader strut (54) extending between the brake shoe assemblies (18,20), and the parking brake actuating lever (64) engages the spreader strut when pivoted in one direction to spread the brake shoe assemblies apart and move same into braking engagement with the rotatable drum (12).

**Patentansprüche**

1. Trommelbremsen-Anordnung (10) mit einer Stützplatte (16), einer abzubremsenden drehbaren Trommel (12), ersten und zweiten Bremsklotz-Anordnungen (18, 20), die an der Stützplatte angebracht und in Bremseingriff· mit der drehbaren Trommel und daraus heraus bewegbar sind, mit Betriebs-Bremsbetätigungsmittel (46) und Abstellbrems-Betätigungsmechanismus (64, 74), um die Bremsklotz-Anordnungen so zu bewegen, wobei der Abstellbrems-Betätigungsmechanismus enthält: einen Abstellbrems-Betätigungshebel (24) mit einem schwenkbar an einer Bremsklotz-Anordnung angebrachten Ende (66), wobei der Abstellbrems-Betätigungshebel wirksam auf die andere Bremsklotz-Anordnung einwirkt, wenn er schwenkend in einer Richtung bewegt wird, um die Bremsklotz-Anordnungen in Bremseingriff mit der drehbaren Trommel zu bringen, eine Abstellbrems-Seilanordnung (74) mit einem Seil (76), das mit einem Ende (88) an einem anderen Ende (72) des Abstellbrems-Betätigungshebels (64) angebracht ist und, wenn es gespannt wird, den Abstellbrems-Betätigungshebel in der einen Richtung bewegt, wobei das Seil sich durch eine Öffnung (94) in der Stützplatte (16) erstreckt und ausgelegt ist, mit dem Abstellbrems-Betätigungshebel verbunden zu werden; das eine Ende (88) des Seils (76) einen ersten Durchmesser mit einem Knopf (90) an seinem einen Ende besitzt, der Knopf einen zweiten Durchmesser besitzt, der wesentlich größer als der erste Durchmesser des einen Endes des Seils ist; gekennzeichnet durch ein Führungs- und Halteglied (106), das an dem anderen Ende (72) des Abstellbrems-Betätigungshebels (64) ausgebildet ist mit einer großen Öffnung (108) in einem Ende (110) mit ausreichender Größe zur Aufnahme des Knopfes in sich, einer kleineren Öffnung (112) in einem anderen Ende (114) mit axialem Abstand von der großen Öffnung und damit durch eine innere Führungsfläche (116) verbunden, wobei die kleinere Öffnung (112) einen größeren Durchmesser aufweist als der erste Durchmesser des einen Endes (88) des Seils (76), der jedoch kleiner ist als der zweite Durchmesser des Knopfes (90), und ein Schlitz (118) durch die innere Führungsfläche (116) ausgebildet ist, der das eine Ende (110) mit dem anderen Ende (114) des Führungs- und Haltegliedes (106) verbindet, wobei das Führungs- und Halteglied den Knopf (90) in Eingriffsbeziehung mit Axialbewegung des Seils (76) und des Knopfes aufnimmt und den Knopf durch den Schlitz (118) mit einem Ende (88) des Seils im Schlitz richtet, der Knopf, nachdem er über das andere Ende (114) des Führungs- und Haltegliedes hinausbewegt wurde, sich in Zugkraft-Übertragungseingriff damit bewegt, wobei das eine Ende (88) des Seils sich aus dem Schlitz (118) bewegt und sich axial durch das eine und das andere Ende des Führungs- und Haltegliedes so erstreckt, daß der Knopf das eine Ende (88) des Seils (76) mit dem anderen Ende (72) des Abstellbrems-Betätigungshebels (64) zur Abstellbrems-Betätigung verrastet; dadurch eine Blind-Steckanordnung des Seils (76) an dem Abstellbrems-Betätigungshebel zuläßt.

2. Trommelbremsen-Anordnung nach Anspruch 1, bei der das Führungs- und Halteglied (106) im wesentlichen trichterförmig ist, wobei das eine Ende (108) das größere Ende und das andere Ende (112) das kleinere Ende ist.

3. Trommelbremsen-Anordnung nach Anspruch 1 oder 2, bei der die Abstellbrems-Seilanordnung (74) enthält: eine Seilleitungsanordnung (80), durch die sich das Seil (76) erstreckt, eine um das eine Ende (88) des Seils aufgenommene Feder (82) mit einem an der Seilleitungsanordnung befestigten Ende (84), wobei die Feder während Axialbewegung des Seils als ein Führungsmittel für das eine Ende (88) des Seils zur Blind-Steckanordnungsverbindung mit dem Abstellbrems-Betätigungshebel (64) wirkt, während das andere Ende (86) der Feder an dem Führungs- und Halteglied (106) angreift, nachdem die Blind-Steckanordnungsverbindung hergestellt ist.

4. Trommelbremsen-Anordnung nach Anspruch 3, bei der ein Führungsrohr (92) in der Öffnung (94) der Stützplatte (16) angebracht ist und die Seilleitungsanordnung (80), das eine Ende (88) des Seils und die Feder (82) axial hindurchgehend aufnimmt und das Führungsrohr relativ zu dem Führungs- und Halteglied (106) des Abstellbrems-Betätigungshebels (64) so angeordnet ist, daß es die Feder und das eine Ende (88) des Seils einschließlich des Knopfes (90) zum Eingriff mit dem Führungs- und Halteglied lenkt.

5. Trommelbremsen-Anordnung nach Anspruch 4, bei dem das Führungsrohr (192) von einer seitlich versetzten Lage gekrümmt ist, wo es sich durch die Öffnung (94) der Stützplatte (16) zu einer seitlich mit dem Führungs- und Halteglied (106) ausgerichteten Lage erstreckt.

6. Trommelbremsen-Anordnung nach Anspruch 4, bei der das Führungsrohr (92) benachbart zur Öffnung (94) der Stützplatte (16) endet und weiter eine an der Stützplatte befestigte Federführung (98) enthält mit einem offenen Durchlaß (100), dessen eines Ende (103) mit dem Abschluß (96) des Führungsrohres und das andere Ende (104) mit dem Führungs- und Halteglied (106) ausgerichtet ist, wobei die Federführung mit Axialbewegung der Abstellbremsseil-Anordnung (94) während der Herstellung der Blind-Steckanordnung zur Aufnahme der Feder (82) da hindurch und zum Richten der Feder und damit des einen Endes (88) des Seils (76) einschließlich Knopf (90) zu dem Führungs- und Halteglied (106) wirksam ist.

7. Trommelbremsen-Anordnung nach einem der Ansprüche 3 bis 6, bei der das Führungsrohr (92, 192) und die Seilführungsanordnung (80) zusammen auf die Seilleitungsanordnung (80) einwirkende Mittel (200–204) besitzen, wenn diese die abschließend angeordnete Lage erreicht, zur Verrastung der Seilleitungsanordnung mit dem Führungsrohr gegen Axialbewegung, wobei das Seil (76) während Abstellbrems-Betätigung und -Lösung darin bewegbar ist, um den Abstellbrems-Betätigungshebel (64) zur Abstellbrems-Betätigung zu bewegen und durch die Feder (82) zum Lösen der Abstellbremse zu einer Abstellbrems-Löselage bewegt zu werden.

8. Trommelbremsen-Anordnung nach einem der Ansprüche 1 bis 7, bei der der Abstellbremsbetätigungs-Mechanismus eine sich zwischen den Bremsklotzanordnungen (18, 20) erstreckende Spreiz-Stütze (54) enthält und der Abstellbrems-Betätigungshebel (64) an der Spreiz-Stütze angreift, wenn er in eine Richtung geschwenkt wird, um die Bremsklotz-Anordnungen auseinander zu spreizen und sie in Bremseingriff mit der drehbaren Trommel (12) zu bewegen.

**Revendications**

1. Ensemble frein à tambour (10) comprenant un flasque (16), un tambour rotatif (12) destiné à être freiné, des premiers et deuxième ensembles segments de frein (18, 20) montés sur le flasque et qu'on peut mettre en contact de freinage et hors de contact de freinage avec le tambour rotatif, des moyens (46) d'actionnement du frein de service et des moyens (64, 74) d'actionnement du frein de stationnement, qui servent à déplacer de cette façon les ensembles segments de frein, le mécanisme d'actionnement du frein de stationnement comprenant un levier (64) d'actionnement du frein de stationnement dont une extrémité (66) est articulée sur l'un des ensembles segments de frein, le levier d'actionnement du frein de stationnement agissant fonctionnellement sur l'autre des ensembles segments de frein lorsqu'on le fait pivoter dans un sens pour mettre les ensembles segments de frein en contact de freinage avec le tambour rotatif, un ensemble câble de frein de stationnement (76) qui possède un câble (76) dont une extrémité (88) est fixée à une autre extrémité (72) du levier (64) d'actionnement du frein de stationnement et qui, lorsqu'il est tendu, déplace le levier d'actionnement du frein de stationnement dans le premier sens, le câble passant à travers un trou (94) du flasque (16) et étant adapté pour être relié au levier d'actionnement du frein de stationnement; la première extrémité (88) du câble (76) possédant un premier diamètre, avec une boule (90) sur son extrémité, la boule possédant un deuxième diamètre nettement supérieur au premier diamètre de la première extrémité du câble, ensemble caractérisé par un organe de guidage et de retenue (106) formé sur l'autre extrémité (72) du levier (64) d'actionnemnet du frein de stationnement et présentant une grande ouverture (108) prévue dans une première extrémité (110), qui est suffisamment grande pour recevoir intérieurement la boule, une plus petite ouverture (112) prévue dans l'autre extrémité (114) qui est espacée axialement de la grande ouverture et est reliée à celle-ci par une surface de guidage interne (116), la petite ouverture (112) ayant un diamètre plus grand que le premier diamètre de la première extrémité (88) du câble (76) mais plus petit que le deuxième diamètre de la boule (90), et une fente (78) formée à travers la surface de guidage interne (116) et qui relie la première extrémité (110) à l'autre extrémité (114) de l'organe de guidage et de retenue (106), l'organe de guidage et de retenue recevant la boule (90) et exerçant un effet de came en réponse au déplacement axial du câble (76) et de la boule et dirigeant la boule à travers la fente (118) lorsqu'une extrémité (88) du câble se trouve dans la fente, tandis que, lorsqu'elle est passée au-delà de l'autre extrémité (114) de l'organe de guidage et de retenue, la boule se place en appui contre cette autre extrémité pour la transmission de la force de tension avec la première extrémité (88) du câble sortant de la fente (118) et s'étendant axialement à travers la première extrémité et l'autre extrémité de l'organe de guidage et de retenue, de sorte que la boule accroche la première extrémité (88) du câble (76) sur l'autre extrémité (72) du levier (64) d'actionnement du frein de stationnement pour permettre l'actionnement du frein de stationnement, ce qui permet de monter le câble (76) en "aveugle" sur le levier d'actionnement du frein de stationnement.

2. Ensemble frein à tambour selon la revendication 1, dans lequel l'organe de guidage et de retenue (106) est pratiquement en forme d'entonnoir, la première extrémité (108) constituant la grande extrémité et l'autre extrémité (112) constituant la petite extrémité.

3. Ensemble frein à tambour selon la revendication 1 ou la revendication 2, dans lequel l'ensemble câble de frein de stationnement (74) comprend un ensemble conduit de câble (80) à travers lequel passe le câble (76), un ressort (82) monté autour de la première extrémité (88) du câble et ayant une extrémité (84) fixée à l'ensemble conduit de câble, le ressort se comportant comme des moyens de guidage pour la première extrémité (88) du câble pendant qu'on pousse le câble axialement pour la fixation sur le levier (64) d'actionnement du frein de stationnement avec montage en "aveugle", l'autre extrémité (86) du ressort attaquant l'organe de guidage et de retenue (106) après que la fixation avec montage en aveugle est terminée.

4. Ensemble frein à tambour selon la revendication 3, dans lequel un guide tubulaire (92, 192) est monté dans le trou (94) du flasque (16) et reçoit l'ensemble conduit de câble (80), la première extrémité (88) du câble (76) et le ressort (82) qui le traversent axialement, le guide tubulaire étant positonné par rapport à l'organe de guidage et de retenue (106) du levier (64) d'actionnement du frein de stationnement de manière à diriger le ressort et la première extrémité (88) du câble, y compris la boule (90) vers leur position d'entrée en prise avec l'organe de guidage et de retenue.

5. Ensemble frein à tambour selon la revendication 4, dans lequel le guide tubulaire (192) est incurvé, à partir d'une position décalée latéralement, située à l'endroit où il traverse le trou (94) du flasque (16) jusqu'à une position alignée latéralement sur l'organe de retenue (106).

6. Ensemble frein à tambour selon la revendication 4, dans lequel le guide tubulaire (92) se termine à proximité du trou (94) du flasque (16) et comprenant en outre un guide de ressort (98) fixé au flasque et présentant un passage ouvert (100) dont une première extrémité (102) se trouve dans l'alignement de l'extrémité (96) du guide tubulaire et l'autre extrémité (104) dans l'alignement de l'organe de guidage et de retenue (106), le guide de ressort ayant pour effet, en réponse au déplacement axial de l'ensemble câble de frein de stationnement (74) au cours du montage en aveugle, de recevoir le ressort (82) à travers ce passage et de diriger le ressort et, par conséquent, la première extrémité (88) du câble (76), y compris la boule (90), vers l'organe de guidage et de retenue (106).

7. Ensemble frein a tambour selon une quelconque des revendications 3 à 6, dans lequel le guide tubulaire (92, 192) et l'ensemble conduit de câble (80) possèdent des moyens (200, 204) qui coopèrent au moment où l'ensemble conduit de câble (80) atteint la position assemblée finale pour verrouiller l'ensemble conduit de câble sur le guide tubulaire de manière à s'opposer aux déplacements axiaux, le câble (76) pouvant se déplacer axialement dans cet ensemble pendant le serrage et le desserrage du frein de stationnement, pour manœuvrer le levier (64) d'actionnement du frein de stationnement pour le serrage du frein de stationnement, et pour être rappelé par le ressort (82) à une position de desserrage du frein de stationnement, pour le desserrage du frein de stationnement.

8. Ensemble frein à tambour selon une quelconque des revendications 1 à 7, dans lequel le mécanisme d'actionnement du frein de stationnement comprend une entretoise d'écartement (54) qui s'étand entre les ensembles segments de frein (18, 20), et le levier (64) d'actionnement du frein de stationnement attaque l'entretoise d'écartement lorsqu'on le fait pivoter dans un premier sens pour écarter les ensembles segments de frein l'un de l'autre et les mettre en contact de freinage avec le tambour tournant (12).

EP 0 315 313 B1

*Fig. 1*

*Fig. 2*

*Fig.3*

*Fig.4*

*Fig.5*

*Fig.6*